# EUROPÄISCHE PATENTSCHRIFT

(11) **EP 2 684 100 B1**
(45) Veröffentlichungstag und Bekanntmachung des Hinweises auf die Patenterteilung: **25.04.2018**
(21) Anmeldenummer: 12712063.2
(22) Anmeldetag: 08.03.2012
(51) Int. Cl.: G05B 23/02, G05B 19/02

(54) **IMPRÄGNIERVERFAHREN UND IMPRÄGNIEREINRICHTUNG**
IMPREGNATING METHOD AND IMPREGNATING DEVICE
PROCÉDÉ D'IMPRÉGNATION ET APPAREIL D'IMPRÉGNATION

(30) Priorität: 09.03.2011 DE 102011013439
(43) Veröffentlichungstag der Anmeldung: 15.01.2014
(73) Patentinhaber: PETT & P.E.T.T. Trade & Industry Products GmbH, 55288 Udenheim (DE)
(72) Erfinder: PETT, Bertram, 55288 Udenheim (DE)
(74) Vertreter: Von Rohr Patentanwälte Partnerschaft mbB
(86) Internationale Anmeldenummer: PCT/EP2012/001033
(87) Internationale Veröffentlichungsnummer: WO 2012/119774

(56) Entgegenhaltungen:
- CN-A- 101 964 570
- DE-C2- 19 822 433
- US-A1- 2002 150 642

## Beschreibung

Die vorliegende Erfindung betrifft ein Imprägnierverfahren und eine Imprägniereinrichtung zum Imprägnieren von elektrotechnischen Bauteilen, insbesondere von Statorstäben für Generatoren zur Erzeugung elektrischer Energie.

Elektrische Bauteile, insbesondere magnetfelderzeugende Wicklungen oder Statorstäbe für Statoren von Generatoren oder anderen elektrodynamischen Maschinen müssen mit einer ihrer Komponenten gegeneinander wirkungsvollen Isolierung versehen sein, um eine entsprechend ihrem Verwendungszweck hohe Spannungsdurchschlagsfestigkeit, Kriechstromfestigkeit, eine bessere Wärmebeständigkeit und niedrigere Verlustfaktoren aufzuweisen. Derartige Statorstäbe werden vorzugsweise in Turbogeneratoren, also Vollpolmaschinen in der Bauart eines Synchrongenerators verwendet und von schnelllaufenden Gas-oder Dampfturbinen angetrieben. Sie bestehen meist aus einem ferromagnetisch und elektrisch leitfähigen Grundkörper sowie Wickeldrähten, welche auf den Grundkörper aufgewickelt sind.

Ein Statorstab besteht aus Kupferteilleitern die mit Glimmerband und Glasfaserband als Isolation umwickelt sind. Sie werden mit Kunstharzen oder Epoxidharzen Imprägniert.

Die Isolierung der Statorstäbe besteht üblicherweise aus einem glimmerhaltigen Isolierband, das mit einem Imprägniermittel getränkt wird. Als Imprägniermittel werden dabei häufig Kunstharze, insbesondere Epoxidharze verwendet, da sie preiswert zur Verfügung stehen und gute langlebige Isolationseigenschaften aufweisen.

Die Kunstharzimprägnierung erfolgt meist in Ganztränkverfahren (Tauchimprägnierung), bei denen die Statorstäbe in einem mit Harz gefüllten Imprägnierbehälter völlig eingetaucht werden und das Imprägniermittel die Isolierschicht oder Isolierumwicklung völlig durchtränkt, wodurch auch durch Anstriche oder andere Beschichtungsverfahren schwer zugängliche Bereiche besser erreicht werden.

Danach erfolgt das Aushärten der beschichteten Imprägnierung über einen technologisch bedingten Zeitraum bei erhöhten Temperaturen.

Neben der hier behandelten Tauchimprägnierung sind auch zahlreiche weitere Isolier- und Imprägnierverfahren derartiger Leiter- oder Statorstäbe, insbesondere für Generatoren und elektrische Maschinen im unteren Leistungsbereich, bekannt, wie etwa Beschichtungsverfahren, bei denen eine Harzbeschichtung in Pulverform auf Drahtwicklungen aufgebracht wird. Dabei kann die Drahtwicklung in einigen Verfahren selbst als Widerstandsheizung verwendet werden.

Die zu imprägnierenden Statorstäbe der hier betrachteten Generatoren sind für größere Leistungsbereiche, etwa von 50 MW bis 1700 MW ausgelegt und weisen erhebliche Abmessungen und ein erhebliches Gewicht auf.

Da bei Großmaschinen dieser Art, wie Turbogeneratoren erhebliche Ströme induziert werden, müssen mit den Statoren große Magnetfelder erzeugt und erhebliche Spannungen abgeschirmt werden. An den Statorwicklungen liegen daher hohe Spannungen an, die gegeneinander dauerhaft isoliert werden müssen. Deshalb werden an die durch Imprägnierung aufgebrachte Isolationsschicht en hohe Anforderungen, insbesondere zur Hochspannungsfestigkeit und Kriechstromfestigkeit gestellt. Weiterhin erfordern auch die nicht unerheblichen Wirbelströme eine gute Wärmebeständigkeit der aufgebrachten Schichten. Ein wesentlicher Faktor zur Sicherung einer guten Hochspannungsfestigkeit und Wärmebeständigkeit ist die Qualität und Gleichmäßigkeit der aufgebrachten Isolationsschichten, welche wiederum von der Imprägniereinrichtung und deren Imprägnierverfahren bestimmt wird. Da sich Isolationsfehler sehr Nachteilig auf die Gesamtfunktionalität und den störungsfreien Dauerbetrieb des Generators auswirken, sind also besonders an die Anlagentechnik und die Prozessführung der Imprägnierung hohe Anforderungen zu stellen.

Zur Imprägnierung von Statorstäben oder anderer elektrischer Baugruppen mit einer elektrisch isolierenden Schicht, insbesondere Kunstharzschicht, sind verschiedene Einrichtungen und Verfahren bekannt.

Die DE 198 22 433 C2 offenbart ein Verfahren zum Imprägnieren wenigstens eines mit Wicklungen versehenen elektrischen Bauteils, bei dem das Bauteil in einem Imprägnierbehälter in ein Imprägniermittel mit einer vorbestimmten Geschwindigkeit eingetaucht und aus diesem ausgetaucht wird, wobei die Wicklung mit elektrischen Strom erwärmt wird und wobei die Geschwindigkeit des Eintauchens und des Austauchens in Abhängigkeit von der Erwärmung der Wicklung gesteuert wird. Die Flutung und Entleerung des Vorratsbehälters kann durch Erzeugen eines Vakuums oder eines Überdrucks in dem Imprägnierbehälter bzw. Vorratsbehälter und Ansteuerung von Ventilen in den Leitungen zwischen dem Imprägnierbehälter und dem Vorratsbehälter in der Geschwindigkeit beeinflusst werden.

Aus dem europäischen Patent EP 978 929 B1 ist ein Verfahren zum Imprägnieren von Leiterstäben für Statorwicklungen von elektrischen Maschinen bekannt. Gemäß diesem bekannten Stand der Technik werden Leiterstäbe (Statorstäbe) in einer Imprägnierwanne mit Kunstharzfüllung eingetaucht und vollkommen von Kunstharz bedeckt. Da zur Überflutung des Leiterstabes mit Imprägnierfluid das 10- bis 50fache der Beschichtungsmenge benötigt wird und die Überschussmenge aus Kostengründen möglichst wieder verwendet werden soll, muss das Imprägnieren bei bestimmten verfahrenstechnisch einzuhaltenden Bedingungen erfolgen. So etwa bei niedrigen Temperaturen, um die Harzstabilität nicht, oder nur unwesentlich zu beeinflussen, sowie bei einer bestimmten Viskosität, welche die Durchimprägnierung der Umwicklung gewährleistet. Die Aushärtung erfolgt dann bei einer höheren Temperatur, um die Härtedauer zu verkürzen. In der EP 978929 B1 wird vorgeschlagen, den Leiterstab statt einer voluminösen Imprägnierwanne zu imprägnieren, auf seiner ganzen Länge mit einer druck-und fluiddichten Hülle zu versehen. Dabei wird der umhüllte Leiterstab in einer Pressvorrichtung allseitig mit einem bestimmten Druck, der größer als der Fluiddruck ist beaufschlagt und das Imprägnierfluid in den Zwischenraum zwischen isoliertem Leiterstab und Hülle eingefüllt. Durch dieses Verfahren soll sowohl der apparative Aufwand als auch der verfahrenstechnische Aufwand beträchtlich reduziert werden, da eine voluminöse Imprägnierwanne nicht mehr nötig ist und die eng an den Leiterstab anliegende Hülle gleichzeitig die Aufgabe einer Trennfolie gegen das Verkleben mit den Spannbacken der Pressvorrichtung übernimmt.

Fraglich bei dem zuvor beschriebenen bekannten Verfahren ist allerdings, ob bei einer so eng anliegenden Hülle in einem Presswerkzeug die geforderte gleichmäßige Imprägnierung in den Zwischenraum möglich ist, da auch die Justierung der Pressvorrichtung mit ihren Manschetten und Spannbacken, insbesondere für die vorgesehenen abgewinkelten Bereiche nicht leicht sein dürfte und einen hohen Grad an Prozessüberwachung und präziser Steuerung voraussetzt. Dazu werden allerdings keine Angaben gemacht.

Aus der CN 101 964 570 A ist ein Imprägnierverfahren und eine Imprägniereinrichtung zum Imprägnieren von Statorstäben bekannt, wobei eine Imprägnierkammer einer Formvorrichtung nach dem Einbringen der Statorstäbe und vor dem Befüllen mit dem Imprägniermittel mittels einer Vakuumeinrichtung evakuiert wird. Nach Erreichen eines vorgegebenen Unterdrucks wird die weitere Evakuierung der Imprägnierkammer beendet und die Imprägnierkammer automatisch mittels einer Förderpumpe mit dem Imprägniermittel befüllt.

Aufgabe der vorliegenden Erfindung ist es, die Nachteile der bisher bekannten Imprägniereinrichtungen und Verfahren zu vermeiden, insbesondere eine technologisch vorteilhafte genaue Verfahrensführung zu gewährleisten und den Einfluss von Fehlerquellen auf die Imprägnierschichtqualität zu minimieren. Im Übrigen ist es eine Aufgabe der vorliegenden Erfindung, eine Emission von Imprägniermittel in die Umgebungweitgehend auszuschließen.

Die vorgenannten Aufgaben werden durch ein Imprägnierverfahren mit den Merkmalen von Anspruch 1 und durch eine Imprägniereinrichtung mit den Merkmalen von Anspruch 9 gelöst.

Erfindungsgemäß wird ein Imprägnierverfahren zum Imprägnieren von elektrotechnischen Bauteilen vorgeschlagen, wobei das Bauteil in eine zwischen zwei Formteilen der Formvorrichtung gebildete Imprägnierkammer eingebracht wird, wobei die Imprägnierkammer nach dem Einbringen des Bauteils und Schließen der Formvorrichtung und vor dem Befüllen mit dem Imprägniermittel mit der Vakuumeinrichtung evakuiert wird, wobei der Druck in der Imprägnierkammer ermittelt und bei Erreichen eines vorgegebenen Unterdrucks die Imprägnierkammer automatisch mit dem Imprägniermittel befüllt wird und wobei der Füllgrad bzw. der Füllstand der Imprägnierkammer ermittelt und bei Erreichen eines vorgegebenen Füllgrades das an die Formvorrichtung anstehende Imprägniermittel mit einem Druckgas und/oder Druckluft beaufschlagt wird. Vorrichtungsgemäß weist die erfindungsgemäße Imprägniereinrichtung dementsprechend eine Imprägniermittelleitung zum Befüllen der Imprägnierkammer auf, die die Formvorrichtung und das Materialdepot für das Imprägniermittel miteinander verbindet. Zudem ist vorrichtungsgemäß wenigstens eine Absaugleitung zur Evakuierung der Imprägnierkammer vorgesehen, die die Formvorrichtung mit der Vakuumeinrichtung verbindet. Die Absaugleitung und die Imprägniermittelleitung sind über Ventile abwechselnd absperrbar, wobei wenigstens ein Drucksensor zur Ermittlung des bei der Evakuierung in der Imprägnierkammer erzeugten Unterdrucks und wenigstens ein Sensor zur Ermittlung des Füllgrades der Imprägnierkammer vorgesehen sind.

Die vorliegende Erfindung weist gegenüber dem Stand der Technik insbesondere den Vorteil auf, dass durch die geschlossene Formvorrichtung und die vorgeschlagene Steuerung bzw. Regelung ein sicherer Fertigungsablauf und eine Emission von Imprägniermittel in die Umgebung weitgehend ausgeschlossen werden können. Fehlerquellen können zudem rechtzeitig erkannt und minimiert oder ausgeschlossen werden. Zudem werden durch das erfindungsgemäße Imprägnierverfahren und die erfindungsgemäße Imprägniereinrichtung die Imprägnierzeit drastisch verkürzt, der Harzverbrauch und die Reinigungszeit auf ein Minimum reduziert und eine gleich bleibende Qualität gewährleistet.

Der in der Imprägnierkammer bei der Evakuierung erzeugte Unterdruck wird mit einem Drucksensor gemessen und die gemessenen Druckmesswerte werden automatisch an die Steuereinrichtung übertragen, die den Druck in der Imprägnierkammer steuert bzw. regelt und automatisch eine Befüllung der Imprägnierkammer vorsieht, wenn ein bestimmter Unterdruck in der Imprägnierkammer erreicht ist. Um einen bestimmten Unterdruck in der Imprägnierkammer während der Befüllung mit dem Imprägniermittel zu gewährleisten, kann eine Druckmessung und -steuerung auch während der Evakuierung erfolgen. Die gemessenen Füllgrade werden ebenfalls an die Steuereinrichtung automatisch übertragen, wobei die Steuereinrichtung bei Erreichen eines vorgegebenen Füllgrades die Beaufschlagung des Imprägniermittels mit einem Druckgas und/oder mit Druckluft bewirkt. Mit dem Druckgas bzw. der Druckluft wird das Imprägniermittel in der Form gehalten und/oder weiter in die Form gepresst, so dass eine vollständige Drucktränkung einer Isolierung des Bauteils mit dem Imprägniermittel und das Ausfüllen von Kapillaren gewährleistet sind.

Durch die Evakuierung der Imprägnierkammer vor deren Befüllung mit dem Imprägniermittel wird sichergestellt, dass es bei der Evakuierung nicht zum Absaugen von Imprägniermittelemissionen in die Umgebung kommen kann. Erfindungsgemäß ist in diesem Zusammenhang vorgesehen, dass das Imprägniermittel lediglich aufgrund des in der Imprägnierkammer erzeugten Unterdrucks in die Imprägnierkammer gesaugt wird. Wenn die Imprägnierkammer bereits Imprägniermittel enthält bzw. mit diesem teilweise oder vollständig befüllt ist, ist dagegen vorzugsweise keine Absaugung vorgesehen. Dadurch lassen sich Emissionen sicher ausschließen. Anders als im Stand der Technik erfolgt erfindungsgemäß die Unterdruckerzeugung nicht über einer im Behälter anstehenden Imprägniermittelphase, was von Vorteil ist. Bei Erreichen eines vorgegebenen Unterdrucks wird die Absaugung aus der Imprägnierkammer bzw. die weitere Evakuierung der Imprägnierkammer beendet, was durch Unterbrechung des Betriebs einer Vakuumpumpe der Vakuumeinrichtung und/oder durch Sperren eines Absaugleitung erfolgen kann, die die Vakuumpumpe mit der Formvorrichtung verbindet.

Bei der Evakuierung und vor dem Befüllen mit dem Imprägniermittel wird in der Imprägnierkammer ein Absolutdruck von weniger als 100 mbar, vorzugsweise von weniger als 1 mbar, erzeugt. Durch die hohe Druckabsenkung auf weniger als 100 mbar, vorzugsweise auf weniger als 1 mbar, wird das Nachströmen des Imprägniermittels insbesondere lediglich aufgrund des erzeugten Unterdrucks gewährleistet.

Die Formvorrichtung kann vor dem Befüllen mit dem Imprägniermittel mit der Temperiereinrichtung vorgewärmt und erst nach dem Befüllen mit der Temperiereinrichtung zum Aushärten des Imprägniermittels aufgeheizt werden. Dadurch wird der Imprägniervorgang weiter verbessert. Vorzugsweise erfolgt das Vorwärmen und Evakuieren gleichzeitig.

Um den Füllgrad der Imprägnierkammer zu ermitteln, kann der Austritt von Imprägniermittel aus der Formvorrichtung bei der Befüllung der Imprägnierkammer mit wenigstens einem Sensor erfasst und an die Steuereinrichtung übermittelt werden.

Die Befüllung der Imprägnierkammer mit dem Imprägniermittel erfolgt vorzugsweise über einen mit dem Materialdepot verbundenen Materialbehälter als Vorlage für das Imprägniermittel, wobei der Materialbehälter vor einer Befüllung der Imprägnierkammer mit dem Imprägniermittel befüllt wird und wobei die Füllmenge des Materialbehälters automatisch mit einem Sensor gemessen und mittels der Steuereinrichtung automatisch gesteuert oder geregelt wird.

Der Materialbehälter kann über eine Druckleitung mit dem Medienanschluss für Druckluft und/oder für Druckgas verbunden sein, was es in einfacher Weise ermöglicht, den Materialbehälter mit Druckluft oder Druckgas zu beaufschlagen und dadurch das Imprägniermittel über die Imprägniermittelleitung noch stärker bzw. weiter in die Imprägnierkammer zu drücken. Durch Druckbeaufschlagung des Imprägniermittels kann die Emission von Schadgasen aus dem Imprägniermittel sicher ausgeschlossen werden. In diesem Zusammenhang kann vorgesehen sein, dass die Imprägniermittelleitung und die Absaugleitung über eine Bypassleitung miteinander verbunden sind. Dies ermöglicht es in einfacher Weise, das Imprägniermittel auf der Eintrittsseite des Imprägniermittels in die Formvorrichtung und auf der Austrittsseite des Imprägniermittels aus der Formvorrichtung jeweils durch entsprechende Druckbeaufschlagung des Imprägniermittels bzw. des Materialbehälters in die Imprägnierkammer zu pressen, was die Imprägnierung weiter verbessert, insbesondere eine weitgehend vollständige Kapillarfüllung gewährleistet.

Der Materialbehälter wird vorzugsweise vor dem Befüllen der Imprägnierkammer mit der Vakuumeinrichtung evakuiert, wobei der Materialbehälter über eine weitere Absaugleitung mit der Vakuumeinrichtung verbunden ist. Vorzugsweise erfolgt das Evakuieren des Materialbehälters gleichzeitig mit dem Evakuieren der Imprägnierkammer. Durch Evakuieren des Materialbehälters wird das im Materialbehälter befindliche Imprägniermittel entgast. Somit gelangen mit dem Imprägniermittel keine Gasblasen in die Formvorrichtung, die den Imprägniervorgang behindern könnten.

Es wird eine Imprägniereinrichtung zur Imprägnierung von elektrotechnischen Bauteilen, insbesondere Statorstäben vorgeschlagen, welche ein Überwachungs- und Steuersystem aufweist, dass durch eine zentrale elektronische Steuereinrichtung zur Erfassung, Speicherung und Auswertung von Prozessdaten, sowie zur Steuerung der Imprägniereinrichtung und ihrer Baugruppen gekennzeichnet ist.

Erfindungsgemäß erfolgt die Mess- und Zustandsdatenerfassung an einer Imprägniereinrichtung mittels eines Sensornetzwerks, welches aus zahlreichen verschiedenen, der Messaufgabe oder Funktion des jeweiligen Moduls oder der Parameter des einzelnen Verfahrensschritte spezialisierten Sensoren besteht. Die Sensoren sind dabei vorzugsweise an den spezifischen Messpunkten der Baugruppen, Ventile und Medienverbindungen der Imprägniereinrichtung angeordnet und mit einer zentralen elektronischen Steuereinrichtung verbunden.

Dabei umfasst eine Imprägniereinrichtung verschiedene Baugruppen und Medienanschlüsse für Betriebsstoffe, Gase und Imprägniermittel. Zentrale Baugruppe einer solchen Imprägniereinrichtung ist eine Formvorrichtung, auch als Imprägnierwerkzeug TVPI (Temperature Vacuum Pressure Impregnation) bezeichnet, mit einem Formoberteil und ein Formunterteil, welches zur Aufnahme des Imprägniergutes, also beispielsweise von insbesondere trockengewickelten Statorstäben und eines Kunstharzes zur Imprägnierung deren Oberflächen dient.

Die Formvorrichtung ist mit einer als Temperiermaschine ausgebildeten Temperiereinrichtung verbunden, welche den Formkörper auf die gewünschte Prozesstemperatur prozesseinleitend aufheizt.

Sind Formoberteil und Formunterteil beispielsweise über einen Verschlussschieber fest verschlossen, kann über eine weitere Verbindung zu einer Vakuumeinrichtung die geschlossene Formvorrichtung vorzugsweise gleichzeitig mit dem Aufheizen auf Prozesstemperatur auf den technisch notwendigen Unterdruck evakuiert werden. Nach der Evakuierung ermöglicht der dann in der Form herrschende Unterdruck die Zuführung des Imprägniermittels, insbesondere eines Kunstharzes aus dem Materialdepot (Vorratstank für Imprägniermittel/Harz) in den Forminnenraum durch Ansaugen.

Ist die Form bis zur technologisch vorgesehenen Füllhöhe mit dem Imprägniermittel gefüllt, wird dessen Zuführung gestoppt und das Imprägniermittel wird mit einem Schutzgas, vorzugsweise N2 unter Druck, beaufschlagt. Der N2 Überdruck dient dazu, dass Imprägniermittel weiter in die Form zu pressen und in der Form zu halten und die Oberflächenbindung, sowie den Füllgrad des Harzes mit dem Glimmerband und Glasfaserband, mit dem das Bauteil beschichtet oder umwickelt sein kann, sicherzustellen.

Erfindungsgemäß werden nun an und zwischen den verschiedenen Baugruppen und Anschlüssen einer an sich bekannten Imprägniereinrichtung mehrere spezialisierte Sensoren an deren jeweiligen Modulen und Medienanschlüssen angeordnet und mit einem zentralen Überwachungs- und Steuersystem zur Datenerfassung, Speicherung und Verarbeitung verbunden. Dabei sind die in der Imprägniereinrichtung verwendeten Sensoren vorzugsweise als Mikrowellensensor und Waage für Materialdruckbehälter, als Drucksensor für die Hydraulik, als Drucksensor für Druckluft, als Drucksensor für die Vakuumpumpe, als Drucksensor für ein Schutzgas, vorzugsweise N2, als Kapazitive Sensoren, als Durchflusssensor, als Temperatursensor, als Näherungssensor, als Füllstandssensor für die Formvorrichtung, als Wegesensor zur Detektion der Verriegelung der Formvorrichtung, als Viskositätssensor, zur Zustandskontrolle des Imprägniermittels und als Feuchtigkeitssensor ausgebildet.

Das mit dem beschriebenen Sensornetzwerk verbundene Überwachungs- und Steuersystem umfasst dabei eine elektronische Steuereinrichtung, vorzugsweise mindestens einen Mikroprozessor, eine elektronische Speichereinrichtung zur Speicherung von Prozess- und anderen Daten, welche vorzugsweise als Speicherkarte (Flashcard) ausgebildet ist, sowie eine als Sensorbildschirm, auch als "Touchscreen" oder "Touchpad" bezeichnet, ausgebildete Anzeige-und Eingabeeinrichtung und wobei die Kommunikation über ein CAN-Bussystem erfolgt.

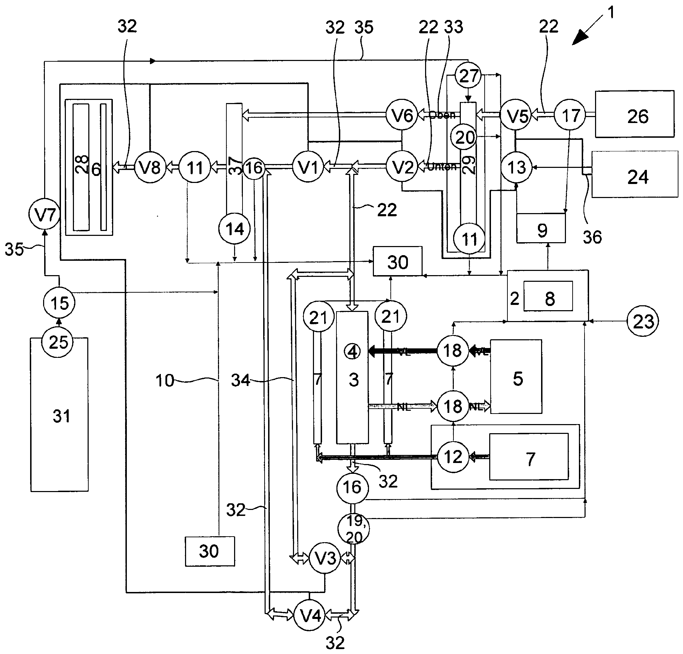

Die Erfindung soll nun für ein Ausführungsbeispiel anhand der Figur 1 näher erläutert werden. Fig. 1 zeigt schematisch das Anlagenschema, den Medienfluss und die Anordnung der einzelnen Sensoren, Stellglieder und Ventile einer Imprägniereinrichtung 1 mit einem Überwachungs- und Steuersystem 2.

Gemäß dem hier dargestellten Anlagenschema eines Ausführungsbeispiels ist die Imprägniereinrichtung 1 mit der zentralen Formvorrichtung 3 als Imprägnierwerkzeug ausgebildet. Als Imprägniermittel werden für diese Anwendung geeignete Kunstharze oder Epoxidharze verwendet.

Vorteilhafterweise werden bei diesem Imprägnierwerkzeug TVPI (Temperature Vacuum Pressure Impregnation) keine umfangreichen Peripherien, wie Autoklaven oder Temperieröfen benötigt. Durch ein geschlossenes Werkzeugsystem ist die Harz- und Styrolemission in die Umgebung des Werkzeugs ausgeschlossen.

Technisch ist das Imprägnierwerkzeug hier vorzugsweise zur Imprägnierung von Statorstäben für Generatoren im Leistungsbereich von etwa 50 MW bis 1700 MW ausgelegt und kann dabei eine Werkzeuglänge etwa zwischen 1 m und 15 m, je nach Stablänge, aufweisen.

Um eventuell auftretende Fehlerquellen zu minimieren und den gesamten Prozessablauf sicherer zu gestalten, sollen erfindungsgemäß an den Prozessschnittstellen 3 bis 7 und 24 bis 29 auf die Messgröße abgestimmte spezifische Sensoren an einer Serienanlage angeordnet und über eine elektronische Steuereinrichtung 8 zu einem Sensornetzwerk 10 vernetzt werden.

Das erfindungsgemäße Überwachungs- und Steuersystem 2 (Sensoriksteuersystem) ermöglicht die ständige Überwachung und punktgenaue Kontrolle des gesamten Imprägnierungsprozesses. Weiterhin können alle einzelnen Prozessschritte aufgezeichnet, ausgewertet und auf einem Speichermedium abgelegt werden.

Dabei ist es möglich, den Lebenslauf der behandelten Statorstäbe aus den Aufzeichnungsdaten zu generieren und an ein vorhandenes ERP-System (Enterprise Ressource Planing System) zu übergeben.

Weiterhin gehört es auch in den Bereich der Erfindung, dass Überwachungs-und Steuersystem 2 um einen Remote-Zugriff (Fernsteuerung) und die graphische Überwachung des Fertigungsprozesses mittels eines Webinterface zu erweitern.

Um ein einfaches Kopieren der Überwachungs- und Steuersoftware des Systems zu verhindern ist zusätzlich ein Kopierschutz über eine MAC-Adresse vorgesehen.

Im Folgenden soll näher auf die Anordnung des Überwachungs- und Steuersystems 2, sowie dessen Wirkungsweise als Verfahrens- und Messablauf beim Betrieb einer erfindungsgemäßen Imprägniereinrichtung 1 eingegangen werden.

Zunächst werden die Startbedingungen der Imprägniereinrichtung 1 und deren Betriebsumgebung gemessen und gespeichert. Diese Parameterwerte werden über den gesamten Produktionszyklus aufgezeichnet und stehen auch noch zu späteren Vergleichen und Auswertungen bereit. Das sind vorzugsweise die Luftfeuchtigkeit mit einem Feuchtigkeitssensor 23, der Vakuumdruck im System und in der Formvorrichtung 3 mit einem Drucksensor 14, der N2 Druck im System, die Temperaturen der Hallenluft, des Harzes und des Wärmeträgeröls der Heizeinrichtung bzw. Temperiereinrichtung 5 mit Temperatursensoren 18, wie etwa mit handelsüblichen PT100-Stabtemperatursensoren.

Mit Inbetriebnahme der Imprägniereinrichtung 1 erfolgt eine Selbstdiagnose aller Komponenten des Überwachungs- und Steuersystems 2, mit SPS-Steuerung vorzugsweise über WINCE Plattform. Programmiert insbesondere mit CODE SYS.

Die Rückmeldung der Diagnoseergebnisse der elektronischen Steuereinrichtung 8, vorzugsweise zum Status des Hydraulikzylinder aufweisenden Hydraulikaggregats 7, der Temperiereinrichtung 5 und einer einen Vakuumtank 37, eine Vakuumpumpe 28, Ventile und Vakuumleitungen umfassenden Vakuumeinrichtung 6 erfolgt über einen Sensorbildschirm, ein Touchscreen oder ein Touchpad als Anzeige- und Eingabeeinrichtung 9 der elektronischen Steuereinrichtung 8, welches auch den Not-Aus-Status des Notabschaltsystems quittiert. Bei Betätigung des "Not-Aus"-Tasters wird das komplette Abschalten der Anlage getestet und alle Ventile geschlossen. Die einzelnen Statusanzeigen erfolgen über die Farbfunktionen von Leuchtanzeigen eines Touchpads.

Das Anfahren der Imprägniereinrichtung 1 beginnt mit dem Öffnen der Formvorrichtung 3 bzw. des Imprägnierwerkzeugs TVPI mit dem Hydraulikaggregat 7.

Der Betriebsdruck des Hydraulikaggregats 7 wird mit einem Drucksensor 12, wie etwa einem elektronischem Druckschalter PN5001, erfasst. Die Hydraulikzylinder werden ausgefahren und dieser Zustand wird durch die Statusanzeige angezeigt.

Nun werden zwei vorbereitete Statorstäbe vom Bediener mit einem Brückenkran in das Formunterteil eingelegt und das Formoberteil mittels Brückenkran auf das Unterteil aufgesetzt. Danach sind alle Hydraulikstempel mit einem Verschlussschieber zu sichern. Die Verschlussschieber und die korrekt eingesetzten Statorstäbe sind nach optischer Kontrolle am Touchpad zu bestätigen.

Zum Verschließen der Formvorrichtung 3 müssen zwei Bediener die Bestätigungstasten an einem Taster 30 gleichzeitig drücken. Für die Hydraulikzylinder wird der Status "Verriegelt" angezeigt und der entsprechende Druck am Hydraulikaggregat 7 mit dem Drucksensor 12 für Hydraulik, z. B. mit einem Druckschalter PN5001, erfasst und an die elektronische Steuereinrichtung 8 gemeldet. Das erfindungsgemäße Überwachungs- und Steuersystem 2 schaltet die Imprägniereinrichtung 1 nun in die Betriebsart "Regelung" und der Betriebsdruck des Hydraulikaggregates 7 wird mit dem Drucksensor 12 erfasst und aufgezeichnet.

Durch Temperatureinstellung an der Temperiereinrichtung 5 wird die Formvorrichtung 3 auf etwa 50 °C vorgewärmt und gleichzeitig über die Vakuumpumpe 28 der Vakuumeinrichtung 6 die Formvorrichtung 3 über eine Absaugleitung 32 auf vorzugsweise weniger als 1 mbar evakuiert. Die Ventile V1, V3, V6, V8 und, vorzugsweise, V4 (Fig. 1) sind dabei geöffnet. Über eine weitere Absaugleitung 33 wird so ein Materialbehälter 29 ebenfalls evakuiert. Eventuelle Restfeuchte im Statorstab und in der Isolation (Glimmerband/Glasfaserband) wird über das Vakuum entzogen.

Weiterhin erfolgt eine Drucküberwachung der evakuierten, geschlossenen Formvorrichtung 3 mittels Drucksensor 14 der Vakuumeinrichtung 6 auf eine bevorzugte Einstellung bis vorzugsweise weniger als 1 mbar, z. B. mit einem elektronischen Drucksensor PG2789 mit einer Analogdisplayanzeige. Dabei ist auch die Ventilüberwachung der einzelnen Kreise aktiviert, d.h. die Ventile des Vakuumkreises (V1, V3, V6 und V8 sowie, vorzugsweise, V4) sind geöffnet. Das Ventil V2 der Imprägniermittelleitung 22 und das Ventil V7 der N2-Druckleitung 35 sind geschlossen. Die N2-Druckleitung 35 kann einen Drucksensor 15 umfassen. Das Ventil V5 ist ebenfalls geschlossen. Die einzelnen Verfahrensschritte und Stellungen der Ventileinrichtungen werden durch die elektronische Steuereinrichtung 8 gesteuert, erfasst und protokolliert.

Nachdem der vorgesehene Unterdruck in der Imprägnierkammer 4 der Formvorrichtung 3 erreicht ist, wird das Ventil V1 geschlossen und das Ventil V2 geöffnet. Durch den Unterdruck in der evakuierten Formvorrichtung 3 wird nun das Imprägnierharz in deren Inneres gesogen. Vorzugsweise ist dabei das Ventil V4 geöffnet und das Ventil V3 geschlossen. Das Ventil V6 kann geöffnet oder geschlossen sein. Vorzugsweise wird das Imprägniermittel lediglich aufgrund des in der Imprägnierkammer 4 erzeugten Unterdrucks in die Imprägnierkammer 4 angesaugt. Die Evakuierung wird in diesem Fall vor dem Befüllen der Formvorrichtung 3 mit dem Imprägniermittel beendet, was durch Schließen des Ventils V8 und/oder Unterbrechung des Betriebs der Vakuumpumpe 28 erfolgen kann. Durch den Vakuumtank 37 wird sichergestellt, dass auch bei geschlossenem Ventil V8 und/oder bei Nichtbetrieb der Vakuumpumpe 28 ein ausreichendes Unterdruckniveau in der Imprägnierkammer 4 aufrechterhalten wird, das zum Ansaugen des Imprägnierharzes führt. Grundsätzlich kann jedoch auch vorgesehen sein, dass die Vakuumpumpe 28 bei geöffneten Ventilen V8 und V4 weiterbetrieben wird, um das Einsaugen des Imprägniermittels in die Imprägnierkammer 4 zu unterstützen.

Die Formvorrichtung 3 wird auf einer Seite soweit mit Harz gefüllt, wobei das Harz schließlich auf der anderen Seite der Formvorrichtung 3 bzw. des Imprägnierwerkzeugs TVPI (Temperature Vacuum Pressure Impregnation) austritt und wobei dieser Zustand von einem kapazitiven Sensor 16 erfasst und an die elektronische Steuereinrichtung 8 gemeldet wird, welche das Ventil V3 öffnet und die Ventile V4, V6 und, vorzugsweise, V8 schließt. Das Ventil V2 bleibt geöffnet. Das Ventil V1 ist geschlossen. Auch bei diesen Verfahrensschritten wird die Stellung der beteiligten Ventile überwacht und ggf. Störungen sofort gemeldet. Sollten Betriebsstörungen auftreten, ist zwischen jedem Verfahrensschritt ein "Not-Aus" Programm vorgesehen, dass die Anlage komplett abschaltet und alle Ventile V1 bis V8 schließt.

Die Formvorrichtung 3 weist weiterhin einen Näherungssensor 19 und/oder einen Füllstandssensor 20 auf, der zur Füllstandsüberwachung des Harzes vorgesehen ist und mit der Ventilsteuerung gekoppelt ist. Hierzu kann ein kapazitiver Sensor als Näherungsschalter vorgesehen werden, so etwa der KQ6005. Bei Meldung von Harzaustritt an den Überlauföffnungen der Formvorrichtung 3 durch den Näherungssensor 19 werden die Ventile V4, V6 und, vorzugsweise, V8 zur Vakuumpumpe 28 geschlossen und das Ventil V7 geöffnet.

Die Ventilüberwachung prüft, ob die Ventile V6 und, vorzugsweise, V8 des Vakuumkreises und das Ventil V4 der Absaugleitung 32 geschlossen sind, sowie das Ventil V7 der Druckleitung 35 (N2) und das Ventil V3 der Bypassleitung 34 geöffnet sind. Für eine Druckmessung in der Druckleitung 35 wird ein Drucksensor 15, verwendbar bis vorzugsweise 25 bar, insbesondere ein PG2793, verwendet.

Um das als Imprägniermittel verwendete Harz in der Imprägnierkammer 4 zu halten, wird ein Materialbehälter 29 als Vorlagebehälter für das Imprägniermittel mit N2-Gas aus einem N2-Anschluss 25 geflutet und unter einem Druck von beispielsweise etwa 6 bar gehalten. Damit ist sichergestellt, dass alle Kapillaren des zu imprägnierenden Bauteils sich mit Harz füllen bzw. verschlossen werden. Die Imprägniermittelleitung 22 und die Bypassleitung 34 müssen ebenfalls mit N2 unter einem Druck von etwa 6 bar gehalten werden.

Dazu wird das Ventil V3 und das Ventil V7 zu den N2-Gasflaschen 31 geöffnet und das Ventil V4 geschlossen. Dadurch kommt es zu einem in Form halten des Harzes an der Eintrittsseite und an der Austrittsseite der Formvorrichtung 3 über die Imprägniermittelleitung 22, die Bypassleitung 34 und den an die Formvorrichtung 3 angrenzenden Teil der Absaugleitung 32.

Bei einer Störung ("Not Aus") in diesem Verfahrensstadium müssen alle Ventile V1 bis V8 geschlossen werden, der Hydraulikdruck und die Temperaturüberwachung müssen aktiv bleiben und separat angefahren werden können. Die Imprägnierung der in der Imprägnierkammer 4 befindlichen Bauteile ist dann nicht erfolgreich zu Ende geführt worden. Der Verfahrensschritt "Aufheizen" muss erneut durchfahren werden.

Durch eine Überlaufkontrolle am Vakuumtank 37 der Vakuumeinrichtung 6 mittels eines Mikrowellensensors 11 und einer Waage 27, die am Materialbehälter 29 angeordnet ist, wird sichergestellt, dass sich nicht zu viel Harz (Imprägniermittel) im Materialbehälter 29 angesammelt hat. Ein Mikrowellensensor 11 kann auch an dem Materialbehälter 29 vorgesehen sein. Hierfür kann beispielsweise der Mikrowellensensor 11 als LR3000 und eine Waage 27 kann als Industriewaage CH3G-150IG-H Satorius ausgebildet sein.

Durch das Öffnen des Ventils V5 erfolgt eine Befüllung des Materialsbehälters 29 mit dem Imprägniermittel aus einem Materialdepot 26 für Imprägniermittel. Damit kein Harz über das Ventil V6 in die Vakuumeinrichtung 6 bzw. die Vakuumpumpe 28 gelangt, wird mit der Waage 27 die Füllmenge des Materialbehälters 29 ermittelt. Wenn eine bestimmte Füllmenge erreicht ist, wird das Ventil V5 mit der Steuereinrichtung 8 automatisch geschlossen. Dadurch ist gewährleistet, dass stets die gleiche Füllmenge in den Materialbehälter 29 und damit in die Formvorrichtung 3 gelangt.

### Prozess "Aufheizen"

Die Formvorrichtung 3 wird nun innerhalb von 1-2 Stunden auf 140-160 °C aufgeheizt. Die Temperaturkontrolle erfolgt über Temperatursensoren 18. Diese Temperatur wird für den nun folgenden Aushärteprozess des Harzes für ca. 6 Stunden gehalten.

Nach 2-4 Stunden in der Aushärtephase kann der N2-Druck auf das Harz entfallen und alle Ventile V1 bis V8 werden geschlossen. Zu diesem Zeitpunkt steht ein Ausgasen von Bestandteilen aus dem Imprägniermittel nicht mehr zu befürchten. Temperatur-, Druck- und Zeitüberwachung der einzelnen Verfahrensschritte erfolgen mittels der von den entsprechenden Sensoren über die elektronische Steuereinrichtung 8 an die Anzeige- und Eingabeeinrichtung 9 übertragenen Messwerte, durch den Bediener der Imprägniereinrichtung 1. Die Messwerte werden protokolliert und aufgezeichnet.

In einer weiteren vorteilhaften Ausführungsform der Erfindung kann ein in der Formvorrichtung 3 eingesetzter und nicht dargestellter Viskositäts- oder Aggregatzustandssensor vorgesehen werden, der den Aggregatzustand des Harzes erfasst, an die elektronische Steuereinrichtung 8 meldet und bei Erreichung der vorgesehenen Werte zu einer Verkürzung der Prozesszeit herangezogen werden kann.

Bei einem Störfall in dieser Phase ("Not Aus") werden alle Ventile V1 bis V8 geschlossen, die Druck- und Temperaturüberwachung müssen aktiv bleiben und separat angefahren werden können. Die Statorstäbe sind Ausschuss, der Prozess "Aufheizen" muss erneut durchfahren werden.

Nach Abschluss des Aushärteprozesses wird die Formtemperatur wieder auf etwa 50 °C heruntergefahren, was etwa einer 4-stündigen Abkühlphase entspricht.

Danach wird die Formvorrichtung 3 aufgefahren und die Verschlussschieber an den Hydraulikzylindern entfernt. Hierzu ist der Taster 30 "Form öffnen" zu betätigen.

Das Formoberteil wird dann mittels Brückenkran in einer Ablagevorrichtung abgelegt. Zum Herunterfahren der Hydraulikzylinder sind zwei Tasten der Anzeige-und Eingabeeinrichtung von zwei Bedienern gleichzeitig zu betätigen. Die Schieberkontrolle erfolgt mittels Wegesensor 21, die Zylinder befinden sich im Status "Ausgefahren", was durch die Druckerfassung am Hydraulikaggregat 7 mittels Drucksensor 12, etwa einem PN5001, detektiert wird.

Die fertigen Statorstäbe werden dann mit einem Kran aus der Formvorrichtung 3 entnommen.

Nach dem Entfernen des Trennbandes und dem Reinigen wird an dem Statorstab der Tangens-Delta-Wert gemessen. Dieser liegt bei diesem Verfahren im unteren Toleranzbereich.

Durch den Steuerbefehl am Taster 30 "Form Schließen" werden die Hydraulikzylinder eingefahren und die Formvorrichtung 3 geschlossen. Die Überwachung erfolgt wieder mittels Drucksensor 12 am Hydraulikaggregat 7.

Zum Reinigen des Formoberteils kann dieses an der Ablagevorrichtung, beispielsweise über einen Kettenzug, geschwenkt werden. Das Werkzeugunterteil, sowie alle Rohre, Dichtungen, Vakuumkanäle, der Vakuumtank 37 der Vakuumeinrichtung 6 und das Harzreservoir müssen überprüft, ggf. gereinigt und ersetzt werden.

Der nächste Imprägnierzyklus wird nun durch erneutes Zuführen von Imprägniermittel durch eine Steuerbefehleingabe an der Anzeige- und Eingabeeinrichtung 9 gestartet. Dadurch werden die Ventile V5, V6 und V8 geöffnet und die Vakuumpumpe 28 in Betrieb genommen. Die Überprüfung des Füllstandes bzw. Füllgrades des Materialbehälters 29 erfolgt beispielsweise über einen (Ultraschall-) Durchflusssensor 17, einen Füllstandsensor 20 und die Waage 27.

Der Füllstand beim Vakuumbefüllen und nach Abschluss des Imprägnierprozesses der Formvorrichtung 3 wird vorzugsweise als Referenzwert gespeichert und dient dann standardmäßig als Füllgröße für den nächsten Bearbeitungszyklus.

Der Abschluss der Reinigung und die Freigabe der Formvorrichtung 3 für den nächsten Produktionszyklus müssen am Touchpad quittiert und als Abschluss der Bearbeitung der Statorstäbe abgespeichert werden. Optional kann auch ein automatischer Reinigungsprozess "CLIP" (Clean in Place) vorgesehen werden. Hierbei wird Stickstoff über die Druckleitung 35 und den Materialbehälter 29 in das System eingespeist, um die Leitungen von Imprägniermittel zu befreien.

Die Steuerung der Ventile V1 bis V8 erfolgt über Druckluft eines Druckluftanschlusses 24. Hier kann ein Drucksensor 13 für Druckluft vorgesehen sein. Die Beaufschlagung mit Druckluft erfolgt über wenigstens eine Steuerleitung 36.

Zum Produktionsende wird die Imprägniereinrichtung 1 mit entsprechender Befehlseingabe an der Anzeige- und Eingabeeinrichtung 9 an die elektronische Steuereinrichtung 8 heruntergefahren.

Erfindungsgemäß können die von den Messeinrichtungen gelieferten Messdaten über eine beliebig gewählte Zeitachse gespeichert, miteinander verknüpft und ausgewertet werden, wobei die archivierten Daten gegen unberechtigten Zugriff über Seriennummer der Hardware und Quellcode auf der Steuerung geschützt werden. Die Speicherung kann dabei vorteilhafterweise in einer Speicherkarte (Flashcard) erfolgen. Das in die elektronische Steuereinrichtung 8 implementierte Steuer- und Überwachungsprogramm wird vorzugsweise nach einer MAC-Adresse des CAN-Bussystems verschlüsselt.

Die vorliegende Erfindung weist gegenüber dem Stand der Technik insbesondere den Vorteil auf, das durch die geschlossene Formvorrichtung TVPI (Temperature Vacuum Pressure Impregnation) und deren sicheren und durch zahlreiche Sensoren überwachte Fertigungsablauf eine Emission von Imprägniermittel, insbesondere Harzemission und Styrolemission, in die Umgebung ausgeschlossen ist, sowie zahlreiche mögliche Fehlerquellen rechtzeitig erkannt und minimiert oder ausgeschlossen werden. Zudem werden die Imprägnierzeit drastisch verkürzt, der Harzverbrauch und die Reinigungszeit auf ein Minimum reduziert und eine gleich bleibende Qualität der Imprägnierung gewährleistet.

Die an entscheidenden Schnittstellen der Imprägniereinrichtung 1 angeordneten Sensoren erfassen zahlreiche Verarbeitungsparameter und erlauben auf deren Basis eine sichere Prozessführung, was letztlich zur Verminderung von Ausschuss und Einsparung von Kosten führt. Die erfassten Daten können zusätzlich beliebig gespeichert, verarbeitet und zur Verfahrensoptimierung herangezogen werden.

Weiter Vorteil dieser Erfindung ist, dass die Bereitstellung der Imprägnierwerkzeuge TVPI (Temperature Vacuum Pressure Impregnation) im Vergleich zu herkömmlichen Verfahren wesentlich schneller und kostengünstiger erfolgen kann und die Imprägnierung einer Generatorwicklung zeitlich genauer und schneller geplant und ausgeführt werden kann. Mit einem TVPI (Temperature Vacuum Pressure Impregnation) Werkzeug können alle verschiedenen Statorstäbe einer Generatorwicklung gefertigt werden, es werden keine zusätzlichen Werkzeuge benötigt.

Durch den Nichtgebrauch von Autoklaven und großen Trocknungsöfen sind viele Arbeitsschritte entfallen und minimieren die Produktionskosten sowie deren Investition.

## Patentansprüche

1. Imprägnierverfahren zum Imprägnieren von elektrotechnischen Bauteilen, vorzugsweise von Statorstäben für Generatoren, mit einer Imprägniereinrichtung (1), wobei die Imprägniereinrichtung (1) eine eine Imprägnierkammer (4) aufweisende Formvorrichtung (3) für wenigstens ein Bauteil, eine an die Formvorrichtung (3) angeschlossene Temperiereinrichtung (5) zur Erwärmung der Formvorrichtung (3), eine Vakuumeinrichtung (6) zur Evakuierung der Imprägnierkammer (4), ein Materialdepot (26) für Imprägniermittel zur Zu- und/oder Abführung eines Imprägniermittels, wenigstens einen Medienanschluss (24, 25) für ein Druckgas und/oder für Druckluft und eine Steuereinrichtung (8) zur Erfassung, Speicherung und Auswertung von Prozessdaten sowie zur Steuerung der Imprägniereinrichtung (1) aufweist, wobei die Steuereinrichtung (8) zur Mess- und Zustandsdatenerfassung mit einem mehrere Sensoren (11 bis 21, 27) aufweisenden Sensornetzwerk (10) verbunden ist, wobei das Bauteil in eine zwischen zwei Formteilen der Formvorrichtung (3) gebildete Imprägnierkammer (4) eingebracht wird, wobei die Imprägnierkammer (4) nach dem Einbringen des Bauteils und Schließen der Formvorrichtung (3) und vor dem Befüllen mit dem Imprägniermittel mit der Vakuumeinrichtung (6) evakuiert wird, wobei der Druck in der Imprägnierkammer (4) automatisch ermittelt und bei Erreichen eines vorgegebenen Unterdrucks die weitere Evakuierung der Imprägnierkammer (4) beendet und die Imprägnierkammer (4) automatisch mit dem Imprägniermittel befüllt wird, so dass keine Absaugung der Imprägnierkammer (4) vorgesehen ist, wenn die Imprägnierkammer (4) teilweise oder vollständig mit Imprägniermittel befüllt ist, wobei bei der Evakuierung und vor dem Befüllen mit dem Imprägniermittel in der Imprägnierkammer (4) ein Absolutdruck von weniger als 100 mbar erzeugt wird, sodass das Imprägniermittel lediglich aufgrund des in der Imprägnierkammer (4) erzeugten Unterdrucks in die Imprägnierkammer (4) gesaugt wird und wobei der Füllgrad der Imprägnierkammer (4) automatisch ermittelt und das Imprägniermittel bei Erreichen eines vorgegebenen Füllgrades automatisch mit einem Druckgas und/oder Druckluft beaufschlagt wird.

2. Verfahren nach Anspruch 1, **dadurch gekennzeichnet, dass** das Imprägniermittel lediglich aufgrund des in der Imprägnierkammer (4) erzeugten Unterdrucks in die Imprägnierkammer (4) gesaugt wird.

3. Verfahren nach Anspruch 1 oder 2, **dadurch gekennzeichnet, dass** in der Imprägnierkammer (4) bei der Evakuierung und vor dem Befüllen mit dem Imprägniermittel und, vorzugsweise, während des Befüllens, ein Absolutdruck von weniger als 100 mbar, vorzugsweise von weniger als 1 mbar, erzeugt wird.

4. Verfahren nach einem der vorhergehenden Ansprüche, **dadurch gekennzeichnet, dass** die Formvorrichtung (3) vor dem Befüllen mit dem Imprägniermittel mit der Temperiereinrichtung (5) vorgewärmt und nach dem Befüllen mit der Temperiereinrichtung (5) zum Aushärten des Imprägniermittels aufgeheizt wird.

5. Verfahren nach einem der vorhergehenden Ansprüche, **dadurch gekennzeichnet, dass** der Austritt von Imprägniermittel aus der Formvorrichtung (3) bei der Befüllung der Imprägnierkammer (4) mit wenigstens einem Sensor (16, 19) erfasst wird.

6. Verfahren nach einem der vorhergehenden Ansprüche, **dadurch gekennzeichnet, dass** die Befüllung der Imprägnierkammer (4) mit dem Imprägniermittel über einen mit dem Materialdepot (26) verbundenen Materialbehälter (29) als Vorlage für das Imprägniermittel erfolgt, wobei der Materialbehälter (29) vor einer Befüllung der Imprägnierkammer (4) mit dem Imprägniermittel befüllt wird und wobei die Füllmenge des Materialbehälters (29) automatisch gemessen und gesteuert oder geregelt wird.

7. Verfahren nach einem der vorhergehenden Ansprüche, **dadurch gekennzeichnet, dass** der Materialbehälter (29) vor dem Befüllen der Imprägnierkammer (4) mit der Vakuumeinrichtung (6) evakuiert wird.

8. Verfahren nach einem der vorhergehenden Ansprüche, **dadurch gekennzeichnet, dass** die Formvorrichtung (3) und/oder der Materialbehälter (29) vor der Evakuierung mit einem Druckgas und/oder mit Druckluft gespült werden.

9. Imprägniereinrichtung (1) ausgebildet zur Durchführung eines Imprägnierverfahrens nach einem der vorhergehenden Ansprüche, mit einer eine zwischen zwei Formteilen gebildete Imprägnierungskammer (4) aufweisenden Formvorrichtung (3) für das Bauteil, mit einer an die Formvorrichtung (3) angeschlossenen Temperiereinrichtung (5) zur Erwärmung der Formvorrichtung (3), mit einer Vakuumeinrichtung (6) zur Evakuierung der Imprägnierkammer (4) und zur Erzeugung eines Absolutdrucks in der Imprägnierkammer (4) von weniger als 100 mbar, mit einem Materialdepot (26) für Imprägniermittel zur Zu- und/oder Abführung eines Imprägniermittels, mit wenigstens einem Medienanschluss (24, 25) für ein Druckgas und/oder für Druckluft und mit einer Steuereinrichtung (8) zur Erfassung, Speicherung und Auswertung von Prozessdaten sowie zur Steuerung der Imprägniereinrichtung (1), wobei die Steuereinrichtung (8) zur Mess- und Zustandsdatenerfassung mit einem mehrere Sensoren (11 bis 21, 23, 27) aufweisenden Sensornetzwerk (10) verbunden ist, wobei die Formvorrichtung (3) und das Materialdepot (26) über wenigstens eine Imprägniermittelleitung (22) zum Befüllen der Imprägnierkammer (4) mit dem Imprägniermittel verbunden sind, wobei die Formvorrichtung (3) und die Vakuumeinrichtung (6) über wenigstens eine Absaugleitung (32) zur Evakuierung der Imprägnierkammer (4) verbunden sind und die Absaugleitung (32) und die Imprägniermittelleitung (22) über Ventile abwechselnd absperrbar sind, wobei wenigstens ein Drucksensor zur Ermittlung des bei der Evakuierung erzeugten Unterdrucks in der Imprägnierkammer (4) und wenigstens ein Sensor (16, 19) zur Ermittlung des Füllgrades der Imprägnierkammer (4) vorgesehen sind und wobei die Steuerung der Imprägniereinrichtung (1) derart ausgebildet ist, dass die Imprägnierkammer (4) nach dem Einbringen des Bauteils und Schließen der Formvorrichtung (3) und vor dem Befüllen mit dem Imprägniermittel mit der Vakuumeinrichtung (6) evakuiert wird, wobei der Druck in der Imprägnierkammer (4) automatisch ermittelt und bei Erreichen eines vorgegebenen Unterdrucks die weitere Evakuierung der Imprägnierkammer (4) beendet und die Imprägnierkammer (4) automatisch mit dem Imprägniermittel befüllt wird, so dass keine Absaugung der Imprägnierkammer (4) vorgesehen ist, wenn die Imprägnierkammer (4) teilweise oder vollständig mit Imprägniermittel befüllt ist, und wobei der Füllgrad der Imprägnierkammer (4) automatisch ermittelt und das Imprägniermittel bei Erreichen eines vorgegebenen Füllgrades automatisch mit einem Druckgas und/oder Druckluft beaufschlagt wird.

10. Imprägniereinrichtung (1) nach Anspruch 9, **dadurch gekennzeichnet, dass** ein mit dem Materialdepot (26) und der Formvorrichtung (3) verbundener Materialbehälter (29) als Vorlage für das Imprägniermittel vorgesehen ist.

11. Imprägniereinrichtung (1) nach einem der vorhergehenden Ansprüche 9 oder 10, **dadurch gekennzeichnet, dass** wenigstens ein Sensor (17, 20, 27) zur Bestimmung der Füllmenge des Materialbehälters (29) vorgesehen ist.

12. Imprägniereinrichtung (1) nach einem der vorhergehenden Ansprüche 9 bis 11, **dadurch gekennzeichnet, dass** der Materialbehälter (29) über eine Druckleitung (35) mit dem Medienanschluss (25) verbunden ist.

13. Imprägniereinrichtung (1) nach einem der vorhergehenden Ansprüche 9 bis 12, **dadurch gekennzeichnet, dass** die Imprägniermittelleitung (22) und die Absaugleitung (32) über eine Bypassleitung (34) miteinander verbunden sind.

14. Imprägniereinrichtung (1) nach einem der vorhergehenden Ansprüche 9 bis 13, **dadurch gekennzeichnet, dass** der Materialbehälter (29) über eine weitere Absaugleitung (33) mit der Vakuumeinrichtung (6) verbunden ist.

## Claims

1. An impregnation method for impregnating electrical component parts, preferably of stator bars for generators, with an impregnating device (1), wherein the impregnating device (1) has a moulding system (3) having an impregnation chamber (4) for at least one component part, a temperature control device (5) connected to the moulding system (3) for heating the moulding system (3), a vacuum device (6) for evacuating the impregnation chamber (4), a material depot (26) for impregnating agent for the supply and/or discharge of an impregnating agent, at least one media connection (24, 25) for a pressurized gas and/or compressed air and a control device (8) for the detection, storage, and evaluation of process data and for controlling the impregnating device (1), wherein the control device (8) is connected to sensor network (10) having a plurality of sensors (11 through 21, 27) for the detection of measurement and status data, wherein the component part is introduced into an impregnation chamber (4) formed between two mould parts of the moulding system (3), wherein the impregnation chamber (4) is evacuated with the vacuum device (6) after the introduction of the component part and closing of the moulding system (3) and before filling with the impregnating agent, wherein the pressure in the impregnation chamber (4) is automatically determined, and further evacuation of the impregnation chamber (4) is ended when a predetermined negative pressure is achieved so that no suctioning of the impregnation chamber (4) is provided when the impregnation chamber (4) is partially or completely filled with impregnating agent, wherein an absolute pressure of less than 100 mbar is produced in the impregnation chamber (4) during the evacuation and before the filling with the impregnating agent, so that the impregnating agent is only suctioned into the impregnation chamber (4) due to the negative pressure produced therein, and wherein the filling level of the impregnating chamber (4) is determined automatically and the impregnating agent is automatically pressurized by a pressurized gas and/or compressed air upon reaching a predetermined filling level.

2. The method according to claim 1, **characterised in that** the impregnating agent is only suctioned into the impregnation chamber (4) due to the negative pressure produced in the impregnation chamber (4).

3. The method according to claim 1 or claim 2, **characterised in that** an absolute pressure of less than 100 mbar, preferably less than 1 mbar, is produced in the impregnation chamber (4) during the evacuation and before the filling with the impregnating agent, and preferably during the filling.

4. The method according to one of the foregoing claims, **characterised in that** the moulding system (3) is preheated by the temperature control device (5) before the filling with the impregnating agent, and after the filling heated by the temperature control device (5) for curing the impregnating agent.

5. The method according to one of the foregoing claims, **characterised in that** the spillage of the impregnating agent out of the moulding system (3) during the filling of the impregnation chamber (4) is detected by at least one sensor (16, 19).

6. The method according to one of the foregoing claims, **characterised in that** the filling of the impregnation chamber (4) with the impregnating agent takes place via a material hopper (29) as a reservoir for the impregnating agent, said hopper being connected with the material depot (26), wherein the material hopper (29) is filled with the impregnating agent before a filling of the impregnation chamber (4) therewith, and wherein the filling capacity of the material hopper (29) is automatically measured and controlled or regulated.

7. The method according to one of the foregoing claims, **characterised in that** the material hopper (29) is evacuated with the vacuum device (6) before the filling of the impregnation chamber (4).

8. The method according to one of the foregoing claims, **characterised in that** the moulding system (3) and/or the material hopper (29) are flushed out with a pressurized gas and/or compressed air before evacuation.

9. An impregnating device (1) designed to carry out the impregnation method according to any one of the preceding claims, with a moulding system (3) for the component part, said system having an impregnation chamber (4) formed between two mould parts, with a temperature control device (5) connected to the moulding system (3) for the heating thereof, with a vacuum device (6) for the evacuation of the impregnation chamber (4) and for the production of an absolute pressure in the impregnation chamber (4) of less than 100 mbar, with a material depot (26) for impregnating agent for the supply and/or discharge of an impregnating agent with at least one media connection (24, 25) for a pressurized gas and/or compressed air and with a control device (8) for detection, storage, and evaluation of process data and for controlling the impregnating device (1), wherein the control device (8) is connected with a sensor network (10) with a plurality of sensors (11 through 21, 23, 27) for the detection of measurement and status data, wherein the moulding system (3) and the material depot (26) are connected via at least one impregnating agent line (22) for the filling of the impregnation chamber (4) with the impregnating agent, wherein the moulding system (3) and the vacuum device (6) are connected via at least one suction line (32) for evacuating the impregnation chamber (4) and the suction line (32) and the impregnating agent line (22) can be shut off alternatingly via valves, wherein at least one pressure sensor for determining the negative pressure produced during the evacuation in the impregnation chamber (4) and at least one sensor (16, 19) for determining the degree of filling of the impregnation chamber (4) are provided, and wherein the control of the impregnating device (1) is formed such that the impregnation chamber (4) can be evacuated with the vacuum device (6) after introduction of the component part and closing of the moulding system (3) and before filling with the impregnating agent, wherein the pressure in the impregnation chamber (4) is determined automatically and the further evacuation of the impregnation chamber (4) can be ended upon achieving a predetermined negative pressure, and the impregnation chamber (4) is automatically filled with the impregnating agent such that no suctioning of the impregnation chamber (4) is provided when said chamber is partially or completely filled with impregnating agent, and wherein the filling level of the impregnation chamber (4) is determined automatically and the impregnating agent is automatically pressurized by a pressurized gas and/or compressed air upon reaching a predetermined filling level.

10. The impregnating device (1) according to claim 9, **characterised in that** the material hopper (29) that is connected to the material depot (26) and the moulding system (3) is provided as a reservoir for the impregnating agent.

11. The impregnating device (1) according to one of the foregoing claim 9 or claim 10, **characterised in that** at least one sensor (17, 20, 27) is provided for determining the filling level of the material hopper (29).

12. The impregnating device (1) according to one of the foregoing claims 9 through 11, **characterised in that** the material hopper (29) is connected with the media connection (25) via a pressure line (35).

13. The impregnating device (1) according to one of the foregoing claims 9 through 12, **characterised in that** the impregnating agent line (22) and the suction line (32) are connected to one another via a bypass line (34).

14. The impregnating device (1) according to one of the foregoing claims 9 through 13, **characterised in that** the material hopper (29) is connected via another suction line (33) to the vacuum device (6).

## Revendications

1. Procédé d'imprégnation de composants électrotechniques, de préférence de barres statoriques pour des générateurs, comprenant un dispositif d'imprégnation (1), le dispositif d'imprégnation (1) présentant un dispositif de moulage (3) présentant une chambre d'imprégnation (4) pour au moins un composant, un dispositif de thermorégulation (5) raccordé au dispositif de moulage (3) destiné à chauffer le dispositif de moulage (3), un dispositif à vide (6) destiné à évacuer la chambre d'imprégnation (4), un stock de matériau (26) pour un produit d'imprégnation pour évacuer et/ou à amener un produit d'imprégnation, au moins un raccord de fluide (24, 25) pour un gaz comprimé et/ou pour l'air comprimé et un dispositif de commande (8) destiné à détecter, stocker et évaluer des données de processus ainsi qu'à commander le dispositif d'imprégnation (1), le dispositif de commande (8) destiné à détecter les données d'état et de mesure à l'aide d'un réseau (10) de capteurs présentant plusieurs capteurs (11 à 21, 27), le composant étant placé dans une chambre d'imprégnation (4) formée entre deux pièces de moule du dispositif de moulage (3), le dispositif d'imprégnation (4) étant évacué après la mise en place du composant et la fermeture du dispositif de moulage (3) et avant le remplissage du moyen d'imprégnation à l'aide du dispositif à vide (6), la pression dans la chambre d'imprégnation (4) étant automatiquement déterminée et lorsqu'une pression négative prédéfinie est obtenue, l'autre évacuation de la chambre d'imprégnation (4) se termine et la chambre d'imprégnation (4) est automatiquement remplie de produit d'imprégnation, de sorte qu'aucune aspiration de la chambre d'imprégnation (4) ne se produit, lorsque la chambre d'imprégnation (4) est remplie partiellement ou complètement de produit d'imprégnation, lors de l'évacuation et avant le remplissage de la chambre d'imprégnation (4) de produit d'imprégnation, une pression absolue inférieure à 100 mbar se produit de sorte que le moyen d'imprégnation soit aspiré en raison de la pression négative produite dans la chambre d'imprégnation (4) et le degré de remplissage de la chambre d'imprégnation (4) étant automatiquement déterminé et le produit d'imprégnation de la chambre d'imprégnation (4) est soumis automatiquement à l'action d'un gaz comprimé et/ou de l'air comprimé lorsqu'un degré de remplissage prédéfini est obtenu.

2. Procédé selon la revendication 1, **caractérisé en ce que** le produit d'imprégnation est aspiré uniquement dans la chambre d'imprégnation (4) en raison de la pression négative produite dans la chambre d'imprégnation (4).

3. Procédé selon la revendication 1 ou 2, **caractérisé en ce que** dans la chambre d'imprégnation (4) lors de l'évacuation et avant le remplissage de produit d'imprégnation, et, de préférence, pendant le remplissage, se produit une pression absolue inférieure à 100 mbar, de préférence inférieure à 1 mbar.

4. Procédé selon l'une quelconque des revendications précédentes, **caractérisé en ce que** le dispositif de moulage (3) avant le remplissage de produit d'imprégnation est préchauffé à l'aide d'un dispositif de thermorégulation (5) et après le remplissage est chauffé à l'aide du dispositif de thermorégulation (5) pour durcir le produit d'imprégnation.

5. Procédé selon l'une quelconque des revendications précédentes, **caractérisé en ce que** la sortie du produit d'imprégnation provenant du dispositif de moulage (3) lors du remplissage de la chambre d'imprégnation (4) est détectée à l'aide d'au moins un capteur (16, 19).

6. Procédé selon l'une quelconque des revendications précédentes, **caractérisé en ce que** le remplissage de la chambre d'imprégnation (4) de produit d'imprégnation s'effectue par un récipient de matériau (29) relié au stock de matériau (26) en tant que collecteur pour le produit d'imprégnation, le récipient de matériau (29) avant un remplissage de la chambre d'imprégnation (4) est rempli de produit d'imprégnation et la quantité de remplissage du récipient de matériau (29) est automatiquement mesurée et commandée ou réglée.

7. Procédé selon l'une quelconque des revendications précédentes, **caractérisé en ce que** le récipient de matériau (29) est évacué avant le remplissage de la chambre d'imprégnation (4) à l'aide du dispositif à vide (6).

8. Procédé selon l'une quelconque des revendications précédentes, **caractérisé en ce que** le dispositif de moulage (3) et/ou le récipient de matériau (29) est rincé avant l'évacuation à l'aide d'un gaz comprimé et/ou d'air comprimé.

9. Dispositif d'imprégnation (1) conçu pour exécuter un procédé d'imprégnation selon l'une quelconque des revendications précédentes, comprenant un dispositif de moulage (3) présentant une chambre d'imprégnation (4) formée entre deux parties de moule pour le composant, comprenant un dispositif de thermorégulation (5) connecté au dispositif de moulage (3) destiné à chauffer le dispositif de moulage (3), comprenant un dispositif à vide (6) destiné à évacuer la chambre d'imprégnation (4) et à produire une pression absolue dans la chambre d'imprégnation (4) inférieure à 100 mbar, comprenant un stock de matériau (26) pour le produit d'imprégnation pour alimenter et/ou évacuer un produit d'imprégnation, comprenant au moins un raccord de fluide (24, 25) pour un gaz comprimé et/ou de l'air comprimé et comprenant un dispositif de commande (8) destiné à détecter, mémoriser et évaluer des données de processus ainsi qu'à commander le dispositif d'imprégnation (1), le dispositif de commande (8) est relié à un réseau (10) de capteurs présentant plusieurs capteurs (11 à 21, 23, 27) pour détecter des données d'état et de mesure et le dispositif de moulage (3) et le stock de matériau (26) étant reliés par au moins une conduite (22) de produit d'imprégnation pour remplir la chambre d'imprégnation (4) de produit d'imprégnation, le dispositif de moulage (3) et le dispositif à vide (6) étant reliés par au moins une conduite d'aspiration (32) pour évacuer la chambre d'imprégnation (4) et la conduite d'aspiration (32) et la conduite (22) de produit d'imprégnation sont obturables par des vannes, au moins un capteur de pression sert à déterminer la pression négative produite lors de l'évacuation dans la chambre d'imprégnation (4) et au moins un capteur (16, 19) sert à déterminer le degré de remplissage de la chambre d'imprégnation (4) et la commande du dispositif d'imprégnation (1) est conçue de telle sorte que la chambre d'imprégnation (4) soit évacuée, une fois que le composant est mis en place et que le dispositif de moulage (3) est fermé et avant le remplissage de produit d'imprégnation à l'aide du dispositif à vide (6), la pression dans la chambre d'imprégnation (4) étant déterminée et lorsqu'une pression négative prédéfinie est obtenue, l'autre évacuation de la chambre d'imprégnation (4) se termine et la chambre d'imprégnation (4) se remplit automatiquement de produit d'imprégnation, de sorte qu'aucune aspiration de la chambre d'imprégnation (4) ne se produise, lorsque la chambre d'imprégnation (4) est remplie partiellement ou complètement, et le degré de remplissage de la chambre d'imprégnation (4) est automatiquement déterminé et le produit d'imprégnation est soumis automatiquement à l'action d'un gaz comprimé et/ou de l'air comprimé lorsqu'un degré de remplissage prédéfini est obtenu.

10. Dispositif d'imprégnation (1) selon la revendication 9, **caractérisé en ce qu'**un récipient de matériau (29) relié au stock de matériau (26) et au dispositif de moulage (3) est conçu sous la forme d'un collecteur pour le produit d'imprégnation.

11. Dispositif d'imprégnation (1) selon l'une quelconque des revendications précédentes 9 ou 10, **caractérisé en ce qu'**au moins un capteur (17, 20, 27) sert à déterminer la quantité de remplissage du récipient de matériau (29).

12. Dispositif d'imprégnation (1) selon l'une quelconque des revendications précédentes 9 à 11, **caractérisé en ce que** le récipient (29) de matériau est relié par une conduite de pression (35) au raccord de fluide (25).

13. Dispositif d'imprégnation (1) selon une quelconque des revendications précédentes 9 à 12, **caractérisé en ce que** la conduite (22) de produit d'imprégnation et la conduite d'aspiration (32) sont reliées par une conduite de dérivation (34) l'une à l'autre.

14. Dispositif d'imprégnation (1) selon une quelconque des revendications précédentes 9 à 13, **caractérisé en ce que** le récipient de matériau (29) est relié par une autre conduite d'aspiration (33) au dispositif à vide (6).
